# EUROPÄISCHE PATENTANMELDUNG

(11) **EP 4 385 812 A1**
(43) Veröffentlichungstag der Anmeldung: **19.06.2024**
(21) Anmeldenummer: 23196365.3
(22) Anmeldetag: 08.09.2023
(51) Int. Cl.: B60N 2/22, B60N 2/66, B60N 2/02, B60N 2/24, B60N 2/68, B60N 2/75

(54) **SITZGRUPPE MIT SITZEN ZUR EINSTELLUNG EINER SITZTIEFE UND EINER LENDENSTÜTZE**

(30) Priorität: 15.12.2022 DE 102022133439
(71) Anmelder: GRAMMER AG, 92289 Ursensollen (DE)
(72) Erfinder: Pöllinger, Thomas, 93059 Regensburg (DE); Neidl, Christopher, 92546 Schmidgaden (DE)
(74) Vertreter: Hannke Bittner & Partner mbB Regensburg

(57) **Zusammenfassung**

Sitzgruppe umfassend einen ersten Sitz (2) und einen zweiten Sitz (3), welche nebeneinander angeordnet sind und jeweils in Sitztiefe und Lendenstütze einstellbar sind, jeweils umfassend ein Sitzteil und ein Rückenlehnenteil. Es kann vorgesehen sein, dass der erste Sitz und der zweite Sitz jeweils zur gleichzeitigen Einstellung einer Sitztiefe und einer Lendenstütze ausgebildet und vorgesehen sind, wobei die Sitzgruppe derart ausgebildet ist, dass der erste Sitz und der zweite Sitz unabhängig voneinander in der jeweiligen Sitztiefe und der Lendenstütze einstellbar sind.

## Beschreibung

Die vorliegende Patentanmeldung betrifft eine Sitzgruppe umfassend einen ersten Sitz und einen zweiten Sitz, welche nebeneinander angeordnet sind, zur gleichzeitigen Einstellung einer Sitztiefe und einer Lendenstütze jedes Sitzes gemäß dem Oberbegriff des Patentanspruches 1.

Aus dem Stand der Technik ist beispielweise die DE 10 2014 118 061 A1 bekannt, welche eine Sitztiefeneinstellung und eine gleichzeitige Lordosen- beziehungsweise Kyphosenunterstützung des unteren Rückens zeigt. Dabei weist der Fahrzeugsitz ein Sitzteil auf, welches im hinteren Bereich ein Bügelelement angeordnet ist, welches bei einem nach vorne schieben des Sitzteils Federblechelemente deformiert und dahingehend die Unterstützung des Lendenbereichs des Rückens einer darauf sitzenden Person einstellt.

Dabei hat der gezeigte Fahrzeugsitz gemäß dem Stand der Technik aufgrund des Vorsehens von Federblechelementen den Nachteil, dass das Sitzteil dazu tendiert, wieder nach hinten verschoben zu werden, da es sich um eine elastische Verformung der Federblechelemente handelt. Ebenso ist eine konstruktiv aufwendige Ausgestaltung des Fahrzeugsitzes vorgesehen.

Es ist daher die Aufgabe der vorliegenden Anmeldung, eine Sitzgruppe mit mehreren Sitzen zur jeweils gleichzeitigen und hinsichtlich der Sitze unabhängigen Einstellung einer Sitztiefe und einer Lendenstütze anzugeben, welcher konstruktiv besonders einfach ausgestaltet ist und die Nachteile des Standes der Technik überkommt.

Gelöst wird die zugrunde liegende Aufgabe durch einen Fahrzeugsitz mit den Merkmalen des Patentanspruches 1.

Erfindungsgemäß ist es ein Kerngedanke der vorliegenden Anmeldung, eine Sitzgruppe umfassend einen ersten Sitz und einen zweiten Sitz bereitzustellen, welche nebeneinander angeordnet sein können und jeweils in Sitztiefe und Lendenstütze einstellbar sind und jeweils ein Sitzteil und ein Rückenlehnenteil umfassen. Weiter erfindungsgemäß ist es vorgesehen, dass der erste Sitz und der zweite Sitz jeweils zur gleichzeitigen Einstellung einer Sitztiefe und einer Lendenstütze ausgebildet und vorgesehen sind, wobei die Sitzgruppe derart ausgebildet ist, dass der erste Sitz und der zweite Sitz unabhängig voneinander in der jeweiligen Sitztiefe und der Lendenstütze einstellbar sind.

Es wird angemerkt, dass Erläuterungen hinsichtlich der Funktionsweise eines Sitzes sich auf beide Sitze beziehen kann. Bei Verwendung allgemeiner oder verallgemeinerte Begriffe kann jeder Sitz oder beide Sitze in alternativer beziehungsweise kumulativer Weise verstanden sein.

Der erste Sitz umfasst demnach ein erstes Sitzteil und ein erstes Rückenlehnenteil und der zweite Sitz ein zweites Sitzteil und ein zweites Rückenlehnenteil.

Das jeweilige Sitzteil umfasst bevorzugt den jeweiligen Sitzteilrahmen. Weiter bevorzugt kann ein entsprechendes Sitzteilpolster vorgesehen sein, auf welchem sich die Person setzen kann.

Erfindungsgemäß ist es vorgesehen, dass der erste Sitz in seiner Sitztiefe und Lendenstütze und der zweite Sitz in seiner Sitztiefe und Lendenstütze unabhängig voneinander einstellbar sind, das heißt, dass eine Sitztiefeneinstellung des ersten Sitzes unabhängig von der Sitztiefeneinstellung des zweiten Sitzes und umgekehrt ist.

Die Sitze sind daher zur gleichzeitigen Einstellung einer Sitztiefe und einer Lendenstütze vorgesehen.

Gemäß einer bevorzugten Ausführungsform kann es vorgesehen sein, dass der erste Sitz einen ersten Rückenlehnenrahmen, einen ersten Sitzteilrahmen und einen ersten Verbindungsrahmen umfasst, wobei der erste Verbindungsrahmen drehbar um eine erste Drehachse mit dem ersten Rückenlehnenrahmen und drehbar um eine zweite Drehachse mit dem ersten Sitzteilrahmen verbunden ist und den ersten Sitzteilrahmen mit dem ersten Rückenlehnenrahmen verbindet, wobei der erste Sitzteilrahmen und der erste Rückenlehnenrahmen mit einem ersten Tragelement derart verbunden sind, dass der erste Sitzteilrahmen und der erste Rückenlehnenrahmen simultan relativ zu dem ersten Tragelement verlagerbar sind.

Alternativ oder kumulativ kann es vorgesehen sein, dass der zweite Sitz einen zweiten Rückenlehnenrahmen, einen zweiten Sitzteilrahmen und einen zweiten Verbindungsrahmen umfasst, wobei der zweite Verbindungsrahmen drehbar um eine dritte Drehachse mit dem zweiten Rückenlehnenrahmen und drehbar um eine vierte Drehachse mit dem zweiten Sitzteilrahmen verbunden ist und den zweiten Sitzteilrahmen mit dem zweiten Rückenlehnenrahmen verbindet, wobei der zweite Sitzteilrahmen und der zweite Rückenlehnenrahmen mit einem zweiten Tragelement derart verbunden sind, dass der zweite Sitzteilrahmen und der zweite Rückenlehnenrahmen simultan relativ zu dem zweiten Tragelement verlagerbar sind.

Besonders bevorzugt sind das erste Tragelement und das zweite Tragelement ortsfest angeordnet, beispielsweise ortsfest gegenüber einer Kabine, eines Bodens oder dergleichen.

Möchte eine Person, welche sich auf dem jeweiligen Sitz niederlassen kann, die Sitztiefe einstellen, so kann die Person manuell das Sitzteil entweder nach vorne oder nach hinten verlagern, bis die korrekte Sitztiefe für die jeweilige Person eingestellt ist.

Bei Einstellung einer Sitztiefe kann es gemäß einer Ausführungsform vorgesehen sein, dass mit dem Sitzteilrahmen auch der Rückenlehnenrahmen hinsichtlich des Tragelements verlagert wird. Dementsprechend wird auch der Verbindungsrahmen, welcher zwischen dem Rückenlehnenrahmen und dem Sitzteilrahmen angeordnet ist, nämlich drehbar angeordnet ist, entsprechend mit dem Sitzteilrahmen verlagert und zieht bei einer Verlagerung des Sitzteilrahmens den Rückenlehnenrahmen entsprechend nach.

Durch die Zwangsführung des Verbindungsrahmens hinsichtlich des Sitzteilrahmens und des Rückenlehnenrahmens verändert sich die Lage beziehungsweise die Anordnung des Verbindungsrahmens im Raum, nämlich dahingehend, dass sich ein unterer Anteil des Verbindungsrahmens entsprechend mit dem Sitzteilrahmen nach vorne beziehungsweise nach hinten verlagert.

Durch die Veränderung der Lage des Verbindungsrahmens im Raum, wie vorhergehend dargestellt, ändert sich dadurch die Lendenstütze des Fahrzeugsitzes.

Der Verbindungsrahmen kann daher auch als Lendenstützenrahmen bezeichnet werden, welcher derart ausgebildet und angeordnet ist, dass der Verbindungsrahmen eine Stütze für den Lendenbereich einer Person darstellen kann.

Unter dem angegebenen Tragelement kann beispielweise verstanden werden, dass es sich hierbei um eine starre Sitzschale handeln kann, welche derart ausgebildet ist, dass der Sitzteilrahmen und der Rückenlehnenrahmen daran befestigt werden können, nämlich dahingehend, dass eine Verlagerung des Sitzteilrahmens und des Rückenlehnenrahmens hinsichtlich des Tragelements möglich ist.

Besonders bevorzugt kann es gemäß einer Ausführungsform vorgesehen sein, dass das erste Tragelement und das zweite Tragelement miteinander starr verbunden sind, so dass das erste Tragelement und das zweite Tragelement ein gemeinsames Tragelement ausbilden.

Starr verbunden kann hierbei bedeuten, dass das erste Tragelement und das zweite Tragelement einteilig bzw. einstückig ausgebildet sein können, um das gemeinsame Tragelement zu bilden. Das gemeinsame Tragelement weist daher die Funktion auf, beide Sitze zu tragen, und dass die Sitzteile gegenüber dem gemeinsamen Tragelement verlagerbar sind.

Besonders bevorzugt ist das gemeinsame Tragelement ortsfest angeordnet, das heißt, insbesondere ortsfest gegenüber einer Kabine oder eines Wagons oder dergleichen.

Gemäß einer besonders bevorzugten Ausführungsform ist es vorgesehen, dass die Verbindung des Sitzteilrahmens und des Rückenlehnenrahmens zu dem Tragelement derart ist, dass der Rückenlehnenrahmen und der Sitzteilrahmen jeweils ausschließlich translatorisch gegenüber dem Tragelement verlagerbar sind. Das heißt bevorzugt, dass der erste Rückenlehnenrahmen und der erste Sitzteilrahmen jeweils ausschließlich translatorisch verlagerbar sind und dass der zweite Rückenlehnenrahmen und der zweite Sitzteilrahmen jeweils ausschließlich translatorisch verlagerbar sind.

Das bedeutet, dass bei einer Verlagerung des Sitzteilrahmens nach vorne beziehungsweise nach hinten der Rückenlehnenrahmen entsprechend nach oben beziehungsweise nach unten bewegt werden kann. Durch die translatorische Verlagerung des Sitzteilrahmens und des Rückenlehnenrahmens ist daher eine Zwangsführung des Verbindungsrahmens vorgesehen und realisiert.

Hierdurch kann eine besonders gute Führung des Verbindungsrahmens erreicht werden, um präzise und möglichst einfach die Lendenstütze des Fahrzeugsitzes einzustellen.

Gemäß einer weiteren bevorzugten Ausführungsform kann es vorgesehen sein, dass der Sitzteilrahmen und der Rückenlehenrahmen einen festen und unveränderbaren Winkel zueinander einschließen. Dadurch kann es vorteilhaft möglich sein, dass der Winkel der Person zwischen dem oberen Bereich des Rückens und des Gesäßes unverändert bleibt, sodass eine weitere besonders vorteilhafte Anpassung im Lendenbereich des Rückens möglich ist.

Gemäß einer weiteren besonders bevorzugten Ausführungsform kann es vorgesehen sein, dass zwischen dem Sitzteilrahmen und dem Verbindungsrahmen ein erster veränderlicher Winkel und zwischen dem Rückenlehnenrahmen und dem Verbindungsrahmen ein zweiter veränderlicher Winkel vorgesehen ist.

Weiter bevorzugt ist es vorgesehen, dass sich die Größe der veränderlichen Winkel bei Verlagerung des Sitzteilrahmens verändern, wodurch die Lendenstütze beziehungsweise die Einstellung der Lendenstützung veränderlich ist.

Dadurch ist es möglich, dass durch die Anordnung des Verbindungsrahmens zu dem Sitzteilrahmen und dem Rückenlehnenrahmen eine gute Anpassung der Lende beziehungsweise der Lendenstütze möglich ist.

Gemäß einer weiteren bevorzugten Ausführungsform kann es vorgesehen sein, dass der Rückenlehnenrahmen und der Sitzteilrahmen mittels Führungseinrichtungen jeweils translatorisch verlagerbar sind. Weiter bevorzugt kann es vorgesehen sein, dass die Führungseinrichtungen zumindest eine Nutensteinführung sein können.

Für den Fall, dass die Führungseinrichtung eine Nutensteinführung ist, ist es besonders vorteilhaft vorgesehen, dass Nutensteinelemente und Nuten vorgesehen sind. Besonders vorteilhaft sind die Nutensteinelemente mit dem Tragelement verbunden und die Nuten in den Sitzteilrahmen und dem Rückenlehnrahmen integriert. Dies hat besonders dahingehend den Vorteil, dass bei der Montage des Fahrzeugsitzes die entsprechenden Rahmen eingehängt werden können.

Besonders vorteilhaft ist es vorgesehen, dass die Nutensteinelemente zumindest teilweise komplementär zu den Nuten ausgebildet sind, sodass die Nutensteinelemente in den Nuten führbar sind.

Besonders einfach und konstruktiv vorteilhaft kann die Führungseinrichtung ausgebildet sein, wenn eines der Nutensteinelemente bzw. jedes Nutensteinelement einen ersten Abschnitt, einen zweiten Abschnitt und einen dritten Abschnitt umfassen, wobei der erste Abschnitt oberhalb der Nute angeordnet ist und breiter als die Nute ausgebildet ist, und wobei der zweite Abschnitt sich an den ersten Abschnitt anschließt und sich durch die entsprechende Nut hindurch erstreckt und ein dritter Abschnitt unterhalb der Nut angeordnet ist und sich an den zweiten Abschnitt anschließt, wobei der dritte Abschnitt ebenso breiter als die Nut ausgebildet ist.

Das Nutensteinelement weist also bevorzugt eine Schichtstruktur auf, ausgebildet durch den ersten Abschnitt, den zweiten Abschnitt und den dritten Abschnitt, welche in einer Höhenrichtung übereinander angeordnet sind. Dadurch, dass bevorzugt der zweite Abschnitt in der Nut geführt werden kann und der erste Abschnitt und der dritte Abschnitt breiter als die Nut ausgebildet sind, kann ein Lösen des Nutensteins und der Nut verhindert werden.

Besonders bevorzugt weist die Nut beziehungsweise weisen die Nuten einen Montageabschnitt auf, welcher dazu ausgebildet und vorgesehen ist, dass der erste Abschnitt durch diesen Montageabschnitt geführt werden kann, sodass der zweite Abschnitt dann durch die Nut hindurchragen kann. Bevorzugt ist der Montageabschnitt derart dimensioniert, dass der erste Abschnitt hindurchgeführt werden kann.

Die Nut wird durch den ersten Abschnitt und den dritten Abschnitt gehalten, sodass ein Herausfallen des Nutensteins aus der Nut gut verhindert werden kann.

Besonders bevorzugt ist die Position des Montageabschnitts beziehungsweise die Verlagerung des Sitzteils derart, dass in einem zusammengebauten Zustand des Fahrzeugsitzes, das heißt, dass das Sitzteil am Sitzteilrahmen montiert ist, der Nutenstein nicht bis in den Montageabschnitt geführt werden kann, um ein Herausfallen des Nutensteins aus der Nut verhindern zu können.

Gemäß einer weiteren bevorzugten Ausführungsform kann es vorgesehen sein, dass der Rückenlehnenrahmen und der Verbindungsrahmen mit einem ersten Polsterelement und der Sitzteilrahmen mit einem zweiten Polsterelement verbunden sind. Besonders bevorzugt ist es vorgesehen, dass das erste Polsterelement unabhängig von dem zweiten Polsterelement ist. Das heißt, dass das erst Polsterelement und das zweiter Polsterelement separate Elemente darstellen und nicht miteinander verbunden sind.

Dadurch, dass die Polsterelemente voneinander unabhängig sind, bedeutet dies, dass eine Deformation des Polsterelements durch die Verlagerung des Sitzteilrahmens und der entsprechenden Verlagerung des Rückenlehnenrahmens und des Verbindungsrahmens reduziert werden kann, sodass die Lebensdauer und die Nutzbarkeit der Polsterelemente insgesamt erhöht werden kann. Ebenso kann insbesondere das erste Polsterelement sich besser an die Gegebenheiten und der Position des Verbindungsrahmens anpassen.

Ebenso kann durch die Unabhängigkeit der Polsterelemente die Montage des Fahrzeugsitzes erleichtert werden, da das Sitzteil mit dem Sitzteilrahmen unabhängig von dem Rückenlehnenrahmen montiert werden kann und bei der Montage dann durch die Verbindung zwischen dem Sitzteilrahmen und dem Verbindungsrahmen eine Verbindung leicht hergestellt werden kann.

Gemäß einer weiteren bevorzugten Ausführungsform kann es vorgesehen sein, dass zur verbesserten Montage zwischen dem Sitzteilrahmen und dem Verbindungsrahmen eine lösbare Verbindung steht. Weiter bevorzugt handelt es sich bei der lösbaren Verbindung bevorzugt um eine Clip-Verbindung.

Besonders bevorzugt gemäß einer weiteren bevorzugten Ausführungsform kann es vorgesehen sein, dass die lösbare Verbindung ein Hülsenelement und ein in das Hülsenelement einbringbares Wellenstück umfasst. Das Hülsenelement kann bevorzugt derart ausgebildet sein, dass in einem Querschnitt das Hülsenelement einen Kreissektor darstellt mit einem Mittelpunktswinkel von mehr als 180° und höchstens 300°. Weiter bevorzugt kann es vorgesehen sein, dass das Wellenstück zumindest teilweise komplementär zu dem Hülsenelement ausgebildet ist und in das Hülsenelement eingebracht werden kann.

Zumindest teilweise komplementär bezieht sich hierbei insbesondere auf einen inneren Bereich des Hülsenelements. Das Hülsenelement weist insbesondere eine äußere und eine innere Begrenzung auf, wobei die innere Begrenzung das Innere des Hülsenelements ausbildet.

Besonders bevorzugt ist das Hülsenelement aus einem elastisch deformierbaren Material ausgebildet, sodass das Wellenstück leicht in das Hülsenelement eingebracht werden kann, da das Wellenstück zum Inneren des Hülsenelements komplementär ausgebildet ist und daher die Öffnung des Hülsenelements leicht erweitert werden muss, um das Wellenstück in das Hülsenelement einclipsen zu können.

Gemäß einer weiteren bevorzugten Ausführungsform kann es vorgesehen sein, dass zur Verlagerung des ersten Sitzteils bzw. des ersten Sitzteilrahmen ein erstes Verstellelement vorgesehen ist, welches dazu ausgebildet ist, das erste Sitzteil in einer Verlagerungsrichtung zu verlagern, und wobei kumulativ oder alternativ zur Verlagerung des zweiten Sitzteils bzw. des zweiten Sitzteilrahmens ein zweites Verstellelement vorgesehen ist, welches dazu ausgebildet ist, das zweite Sitzteil in der Verlagerungsrichtung zu verlagern.

Durch das Vorsehen von zwei Verstellelementen, eines pro Sitz, können die Sitztiefen und die Lendenstütze unabhängig voneinander eingestellt bzw. angepasst werden.

Die Verlagerungsrichtung kann beispielsweise eine Sitzlängsrichtung sein. Ebenso kann unter der Verlagerungsrichtung ausgehend von der Rückenlehne nach vorne bzw. nach hinten verstanden werden.

Gemäß einer weiteren bevorzugten Ausführungsform kann es vorgesehen sein, dass das erste Verstellelement mit dem ersten Sitzteilrahmen und dem ersten Tragelement und das zweite Verstellelement mit dem zweiten Sitzteilrahmen und dem zweiten Tragelement verbunden sind. Besonders bevorzugt sind die Verstellelemente in Höhenrichtung gesehen unterhalb des Sitzpolsters angeordnet. Insgesamt ergibt sich eine platzsparende und eingreifsichere Anordnung hierdurch.

Gemäß einer besonders bevorzugten Ausführungsform kann es vorgesehen sein, dass das erste Verstellelement und das zweite Verstellelement mit einer einzigen Steuereinheit verbunden sind, wobei die Steuereinheit dazu vorgesehen und ausgebildet ist, die Verstellelemente unabhängig voneinander anzusteuern.

Durch das Vorsehen von einer einzigen bzw. genau einer Steuereinheit kann der Platzbedarf und die Herstellungskosten weiter reduziert werden. Das Steuergerät ist dazu vorgesehen und ausgebildet, die Verstellelemente unabhängig voneinander anzusteuern, so dass eine Unabhängigkeit der Sitztiefeneinstellung und der Lendenstütze der beiden Sitze zueinander vorgenommen werden kann.

Weiter kann gemäß einer bevorzugten Ausführungsform der Platzbedarf weiter reduziert werden, wenn es vorgesehen ist, dass die Steuereinheit unterhalb des ersten Sitzteilrahmens und unterhalb des zweiten Sitzteilrahmens sowie zwischen dem ersten Verstellelement und dem zweiten Verstellelement angeordnet ist.

Weiterführende Ausgestaltungen und Ausbildungen in den Ausführungsformen untereinander sind auf die weiteren Ausführungen anwendbar und sind untereinander frei kombinierbar, sofern sie nicht gegenläufigen Ausführungsformen entsprechen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen.

Die Erfindung wird nachfolgend in Zusammenhang mit den Figuren näher dargestellt.
- Fig. 1A: Sitzgruppe gemäß einer Ausführungsform in einer Grundstellung;
- Fig. 1B: Sitzgruppe der Figur 1A mit einem Sitz in einer verlagerten Stellung;
- Fig. 1C: Sitzgruppe der Figur 1A mit Polsterelementen;
- Fig. 1D: Sitzgruppe nach Figur 1C in einer Seitenansicht;
- Fig. 2A: Sitzgruppe in einer Seitenansicht in der Grundstellung;
- Fig. 2B: Sitzgruppe der Figur 2A in einer Schnittansicht;
- Fig. 2C: Sitzgruppe mit zumindest einem verlagerten Sitz in einer Seitenansicht;
- Fig. 2D: Sitzgruppe der Figur 2C in einer Schnittdarstellung;
- Fig. 3: Sitzgruppe mit weiteren Komponenten;
- Fig. 4: Sitzgruppe der Figur 3 in einer teilweisen Explosionsdarstellung;
- Fig. 5A-5D: Darstellung der Komponenten.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

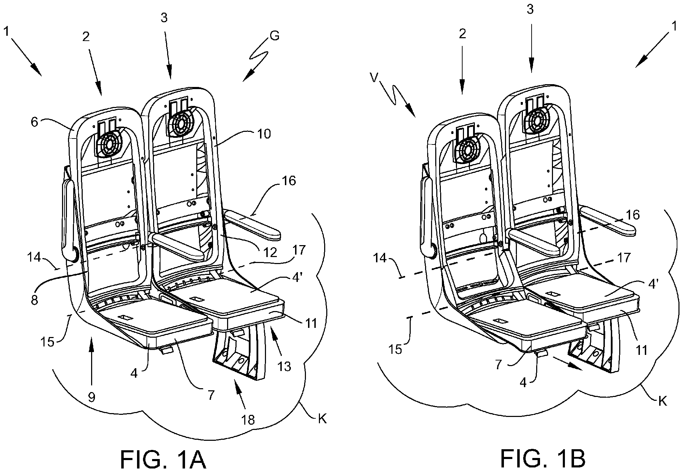

In der Figur 1A ist eine Sitzgruppe 1 umfassend einen ersten Sitz 2 und einen zweiten Sitz 3, welche nebeneinander in einer Breitenrichtung B gesehen angeordnet sind, gezeigt. Die nachfolgenden Erläuterungen und Erklärungen gelten hinsichtlich jedes der Sitze 2, 3.

Wie zu erkennen ist, umfasst der erste Sitz 2 einen ersten Rückenlehnenrahmen 6, einen ersten Sitzteilrahmen 7 und einen ersten Verbindungsrahmen 8. Dabei sind der erste Rückenlehnenrahmen 6 und der erste Verbindungsrahmen 8 drehbar um eine erste Drehachse 14 miteinander verbunden. Weiter ist der erste Verbindungsrahmen 8 mit dem Sitzteilrahmen 7 ebenfalls drehbar verbunden um eine zweite Drehachse 15.

Weiter ist ein erstes Tragelement 9 dargestellt, welches hinsichtlich eines Fahrzeugs bzw. einer Kabine K ortsfest und starr damit verbunden ist. Der erste Rückenlehnenrahmen 6, der erste Sitzteilrahmen 7 und der Verbindungsrahmen 8 sind dabei mit dem ersten Tragelement 9 verbunden. Die Verbindung zwischen den ersten Rahmen 6, 7, 8 mit dem ersten Tragelement 9 sind dabei derart, dass die ersten Rahmen 6, 7, 8 gegenüber dem ersten Tragelement 9 verlagerbar sind.

Bevorzugt weist das erste Tragelement 9 einen ersten Rückenlehnenabschnitt 25 und einen Sitzteilabschnitt 26 auf, wobei der erste Rückenlehnenabschnitt 25 mit dem ersten Rückenlehnenrahmen 6 und der erste Sitzteilabschnitt 26 mit dem ersten Sitzteilrahmen 7 verbindbar bzw. verbunden sind.

An dem ersten Tragelement 9, insbesondere an dem ersten Rückenlehnenabschnitt 25 kann eine oder mehrere Armlehnen 27 angeordnet werden.

Wie ebenso zu erkennen ist, umfasst der zweite Sitz 3 einen zweite Rückenlehnenrahmen 10, einen zweiten Sitzteilrahmen 11 und einen zweiten Verbindungsrahmen 12. Dabei sind der zweite Rückenlehnenrahmen 10 und der zweite Verbindungsrahmen 12 drehbar um eine dritte Drehachse 16 miteinander verbunden. Weiter ist der zweite Verbindungsrahmen 12 mit dem zweiten 11 ebenfalls drehbar verbunden um eine vierte Drehachse 17.

Weiter ist ein zweites Tragelement 13 dargestellt, welches hinsichtlich eines Fahrzeugs bzw. einer Kabine K ortsfest und starr damit verbunden ist. Der zweite Rückenlehnenrahmen 10, der zweite Sitzteilrahmen 11 und der zweite Verbindungsrahmen 12 sind dabei mit dem zweiten Tragelement 13 verbunden. Die Verbindung zwischen den zweiten Rahmen 10, 11, 12 mit dem zweiten Tragelement 13 sind dabei derart, dass die zweiten Rahmen 10, 11, 12 gegenüber dem zweiten Tragelement 13 verlagerbar sind.

Bevorzugt weist das zweite Tragelement 13 einen zweiten Rückenlehnenabschnitt 28 und einen zweiten Sitzteilabschnitt 29 auf, wobei der zweite Rückenlehnenabschnitt 28 mit dem zweiten Rückenlehnenrahmen 10 und der zweite Sitzteilabschnitt 29 mit dem zweiten Sitzteilrahmen 11 verbindbar bzw. verbunden sind.

An dem zweiten Tragelement 13, insbesondere an dem zweiten Rückenlehnenabschnitt 28 kann eine oder mehrere Armlehnen 27 angeordnet werden.

Das erste Tragelement 9 und das zweite Tragelement 13 bilden zusammen ein gemeinsames Tragelement 18. Das erste Tragelement 9 und das zweite Tragelement 13 sind dabei einstückig bzw. einteilig miteinander verbunden.

Die Sitze 2, 3 gemäß der Figur 1A sind in einer Grundstellung G dargestellt, das heißt, dass ein jeweiliges Sitzteil 4, 4' in seiner Ausgangsposition vorliegt, also noch nicht nach vorne verlagert worden ist. Die Stellung, in welcher der jeweilige Sitzteilrahmen 7, 11 in seiner an der weitesten hinten angeordneten Stellung ist, wird als die Grundstellung G definiert.

In der Figur 1B ist nun einer der zwei Sitze 2, 3 in einer verlagerten Stellung V dargestellt, konkret der erste Sitz 2, das heißt, dass das erste Sitzteil 4 beziehungsweise der Sitzteilrahmen 7 nach vorne verschoben ist, dargestellt durch den entsprechenden Pfeil. Durch die Verbindung des ersten Rückenlehnenrahmens 6, des Sitzteilrahmens 7 und des Verbindungsrahmens 8 werden gemäß der Verlagerung des ersten Sitzteilrahmens 7 nach vorne entsprechend der Rückenlehnenrahmen 6 nach unten bewegt, ebenso dargestellt durch den entsprechenden Pfeil, und der Verbindungsrahmen 8 im Bereich der zweiten Drehachse 14 mit dem Sitzteilrahmen 7 nach vorne und dem Bereich der ersten Drehachse 14 mit dem ersten Rückenlehnrahmen 6 nach unten bewegt.

Wie entsprechend der Figur 1B gut zu erkennen ist, ist durch die Verlagerung des ersten Sitzteilrahmens 7 nach vorne einerseits die Sitztiefe eingestellt worden sowie ebenfalls durch die Zwangsführung des ersten Verbindungsrahmens 8 wurde ebenso die Lendenstütze des Sitzes 2 eingestellt.

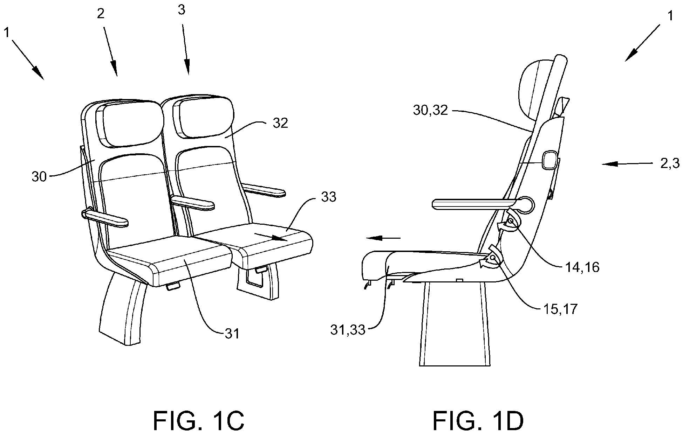

In der Figur 1C ist die Sitzgruppe 1 gemäß den Figuren 1A beziehungsweise 1B nochmals dargestellt, wobei ein erstes Polsterelement 30 und ein zweites Polsterelement 31 für den ersten Sitz 2 und ein drittes Polsterelement 32 und ein viertes Polsterelement 33 zu erkennen sind, wobei das erste Polsterelement 30 mit dem ersten Rückenlehnenrahmen 6 und dem ersten Verbindungsrahmen 8 verbunden ist. Das zweite Polsterelement 31 ist mit dem Sitzteilrahmen 7 verbunden. Insbesondere sind die Polsterelemente 30, 31 unabhängig voneinander, das heißt, dass keinerlei wirktechnische Verbindung zwischen den beiden Polsterelementen 30, 31 vorliegt. Jedoch können sich die Polsterelement 30, 31 berühren, sind jedoch in der Bewegung und in der Ausfertigung voneinander unabhängig. Weiter ist das dritte Polsterelement 32 mit dem zweiten Rückenlehnenrahmen 10 und dem zweiten Verbindungsrahmen 12 verbunden ist. Das vierte Polsterelement 33 ist mit dem Sitzteilrahmen 11 verbunden. Insbesondere sind die Polsterelemente 32, 33 unabhängig voneinander, das heißt, dass keinerlei wirktechnische Verbindung zwischen den beiden Polsterelementen 32, 33 vorliegt. Jedoch können sich die Polsterelement 32, 33 berühren, sind jedoch in der Bewegung und in der Ausfertigung voneinander unabhängig.

In der Figur 1D ist der Fahrzeugsitz 1 in einer Seitendarstellung dargestellt, wobei einerseits die Grundstellung G und andererseits die verlagerte Stellung V dargestellt sind. Durch einen Vergleich der beiden Stellungen G, V ist einerseits gut zu erkennen, wie die Sitztiefe des Sitzteils 4, 4' beziehungsweise Sitzteilrahmens 7, 11 und andererseits die Lendenstütze mittels des Verbindungsrahmens 8, 12 eingestellt worden sind.

Ebenso ist es der Fall, dass die erste Drehachse 5 immer oberhalb der zweiten Drehachse 6 angeordnet ist. Dabei sind die Drehachsen 5, 6 derart angeordnet, dass der Bereich zwischen den Drehachsen 5, 6 dem Lendenbereich einer Person entspricht. Gleiches gilt ebenso für den Verbindungsrahmen 4. Gleiches gilt für die dritte Drehachse 16 und die vierte Drehachse 17.

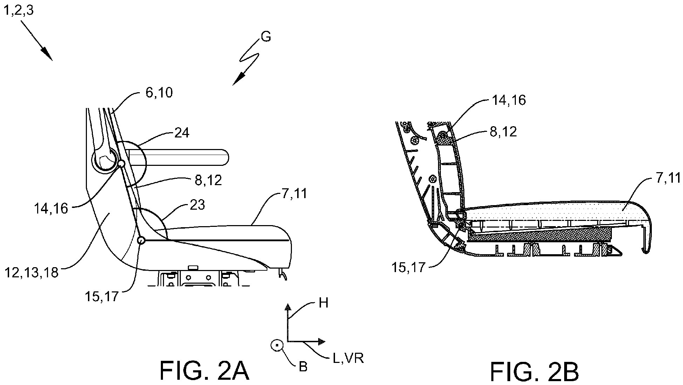

In den nachfolgenden Figuren 2A bis 2D werden verschiedene Stellungen der Sitze 2, 3 gezeigt.

Die jeweiligen Figuren 2A bis 2D sind entweder in einer Seitendarstellung oder in einer Schnittdarstellung dargestellt.

Die Figur 2A zeigt den Sitz 2, 3 in seiner Grundstellung G, das heißt, dass der jeweilige Sitzteilrahmen 8, 12 bzw. das Sitzteil 4, 4' in seiner hintersten Stellung angeordnet ist. Der Sitzteilrahmen 8, 12 und der Rückenlehnenrahmen 6, 10 sind dabei ausschließlich translatorisch gegenüber dem Tragelement 12, 13, 18 verlagerbar. Das heißt insbesondere, dass der Rückenlehenrahmen 6, 10 und der Sitzteilrahmen 7, 11 in ihre Erstreckungsrichtung bewegt werden können, was der Längsrichtung L bzw. der Verlagerungsrichtung VR entspricht.

Weiter ist es vorgesehen, dass zwischen dem Rückenlehnrahmen 6, 10 und dem Sitzteilrahmen 7, 11 ein fester und unveränderbarer Winkel 22 ausgebildet ist. Weiter ist zwischen dem Rückenlehnenrahmen 6, 10 und dem Verbindungsrahmen 8, 12 ein zweiter veränderbarer Winkel 24 und zwischen den Verbindungsrahmen 8, 12 und dem Sitzteilrahmen 7, 11 ein erster veränderbarer Winkel 23 ausgebildet. Diese veränderbaren Winkel 23, 24 verändern sich je nach Stellung des Sitzteilrahmens 7, 11 und dementsprechend des Rückenlehnenrahmens 6, 10.

In der Figur 2B ist der Fahrzeugsitz gemäß der Figur 2A in einer Schnittdarstellung dargestellt.

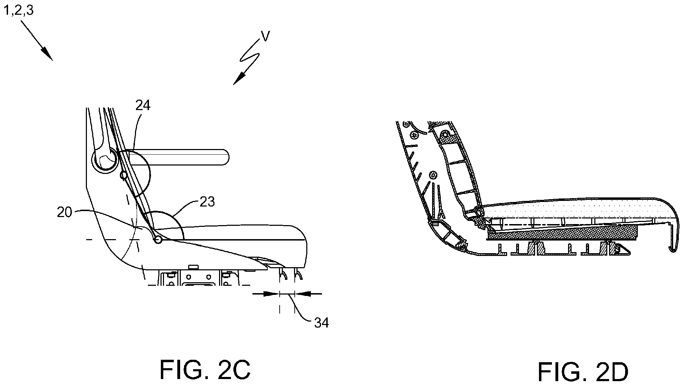

In der Figur 2C ist eine verlagerte Stellung V eines oder beider Sitze 2, 3 dargestellt, wobei der Sitzteilrahmen 7, 11 nach vorne verschoben worden ist um eine Sitztiefe 34. Entsprechend der Verlagerung des Sitzteilrahmens 7, 11 nach vorne um eben die Sitztiefe 34 wird der Verbindungsrahmen 8, 12 entsprechend mitgezogen und dementsprechend wurde auch der Rückenlehnenrahmen 6, 10 entlang der Erstreckungsrichtung des Rückenlehnenrahmens 6, 10 nach unten bewegt. Wie weiter zu erkennen ist, haben sich die Größen der veränderbaren Winkel 23, 24 verändert.

Konkret verändern sich die Winkel 23, 24 derart, dass bei einer Verlagerung um eine Sitztiefe 34 nach vorne sich der erste veränderbare Winkel 23 vergrößert und der zweite veränderbare Winkel 24 verkleinert.

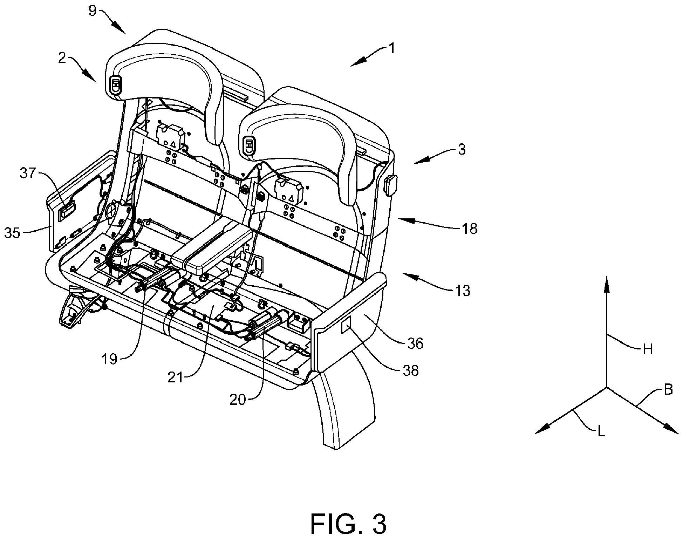

In der Figur 2D ist der Sitz 2, 3 gemäß der Figur 3C in einer Schnittdarstellung dargestellt.

In der Figur 3 ist die Sitzgruppe 1 mit weiteren Komponenten dargestellt. Zum Verstellen bzw. Verlagern des jeweiligen Sitzteils 4, 4` sind ein erstes Verstellelement 19 und ein zweites Verstellelement 20 vorgesehen, wobei durch das erste Verstellelement 19 das erste Sitzteil 4 und durch das zweite Verstellelement 20 das zweite Sitzteil 4' verlagerbar ist.

Das erste Verstellelement 19 ist mit dem ersten Sitzteilrahmen 7 und dem ersten Tragelement 9 und das zweite Verstellelement 20 mit dem zweiten Sitzteilrahmen 11 und dem zweiten Tragelement 13 verbunden. Bevorzugt sind die Verstellelemente 19, 20 unterhalb des Polsterelements des Sitzteils 4, 4' angeordnet.

Die Verstellelemente 19, 20 sind unabhängig voneinander betätigbar, so dass die jeweiligen Sitzteile 4, 4' unabhängig voneinander verlagert werden können.

Eine Steuerung bzw. Ansteuerung der Verstellelemente 19, 20 wird durch eine Steuereinheit 21 vorgenommen, wobei das erste Verstellelement 19 und das zweite Verstellelement 20 mit der einzigen Steuereinheit 21 verbunden sind, wobei die Steuereinheit 21 dazu vorgesehen und ausgebildet ist, die Verstellelemente 19, 20 unabhängig voneinander anzusteuern.

Besonders bevorzugt ist es vorgesehen, dass die Steuereinheit 21 unterhalb, in Höhenrichtung H gesehen, des ersten Sitzteilrahmens 7 und unterhalb des zweiten Sitzteilrahmens 11 sowie zwischen dem ersten Verstellelement 19 und dem zweiten Verstellelement 20, in Breitenrichtung B gesehen, angeordnet ist.

Zur Einstellung der jeweiligen Sitztiefe ist es vorgesehen, dass die Steuereinheit 21 mittels Schalterelemente 37, 38 Steuerdaten zum Ansteuern der Verstellelemente 19, 20 erhält. Bevorzugt ist ein erstes Schalterelement 37 vorgesehen. Durch die Betätigung des ersten Schalterelements 37 werden entsprechende Signale an die Steuereinheit 21 übermittelt, welche dann das erste Verstellelement 19 ansteuert. Bevorzugt ist ein zweites Schalterelement 38 vorgesehen. Durch die Betätigung des zweiten Schalterelements 38 werden entsprechende Signale an die Steuereinheit 21 übermittelt, welche dann das zweite Verstellelement 20 ansteuert.

Es können bevorzugt ein erstes Seitenteil 35, welches seitlich des ersten Sitzes 2 angeordnet ist, und ein zweites Seitenteil 36, welches seitlich des zweiten Sitzes 3 angeordnet ist, vorgesehen sein, wobei in dem ersten Seitenteil 35 das erste Schalterelement 37 und in dem zweiten Seitenteil 36 das zweite Schalterelement 38 angeordnet sein können. Hierdurch ist jedem Sitz 2, 3 ein Schalterelement 37, 38 zugeordnet und können von der jeweiligen Person, die auf dem Sitz 2, 3 sitzt, betätigt werden.

Entsprechend sind die Schalterelemente 37, 38, die Verstellelemente 19, 20 und die Steuereinheit 21 signaltechnisch, beispielsweise mittels einer Verkabelung 40, verbunden.

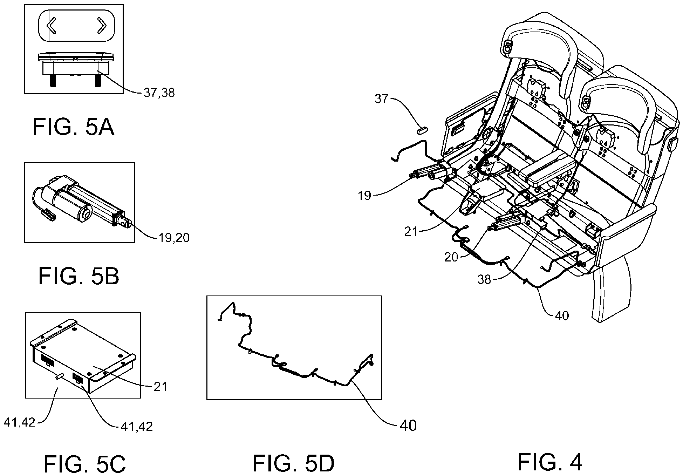

In der Figur 4 sind die Komponenten in einer zumindest teilweisen Explosionsdarstellung nochmal dargestellt.

In der Figur 5A ist ein Schalterelement 37, 38 dargestellt in einer Seitenansicht bzw. Draufsicht. In der Figur 5B ist ein Verstellelement 19, 20 dargestellt, welches beispielsweise als ein Linearmotor oder dergleichen ausgebildet sein kann. In der Figur 5C ist die Steuereinheit 21 dargestellt, mit entsprechenden Eingängen 41 bzw. Ausgängen 42. In der Figur 5D ist die Verkabelung 40 zwischen den Schalterelementen 37, 38, den Verstellelementen 19, 20 und der Steuereinheit 21 nochmals dargestellt.

Sämtliche in den Anmeldungsunterlagen offenbarten Merkmale werden als erfindungswesentlich beansprucht, sofern sie einzeln oder in Kombination gegenüber dem Stand der Technik neu sind.

Alle aufgeführten Merkmale können miteinander in beliebiger Weise kombiniert werden.

### Bezugszeichenliste

- 1: Sitzgruppe
- 2: erster Sitz
- 3: zweiter Sitz
- 4: Sitzteil
- 5: Rückenlehnenteil
- 6: erster Rückenlehnenrahmen
- 7: erster Sitzteilrahmen
- 8: erster Verbindungsrahmen
- 9: erstes Tragelement
- 10: zweiter Rückenlehnenrahmen
- 11: zweiter Sitzteilrahmen
- 12: zweiter Verbindungsrahmen
- 13: zweites Tragelement
- 14: erste Drehachse
- 15: zweite Drehachse
- 16: dritte Drehachse
- 17: vierte Drehachse
- 18: gemeinsames Tragelement
- 19: erstes Vestellelement
- 20: zweites Verstellelement
- 21: Steuereinheit
- 22: fester Winkel
- 23: erster veränderlicher Winkel
- 24: zweiter veränderlicher Winkel
- 25: erster Rückenlehnenabschnitt
- 26: erster Sitzteilabschnitt
- 27: Armlehne
- 28: zweiter Rückenlehnenabschnitt
- 29: zweiter Sitzteilabschnitt
- 30: erstes Polsterelement
- 31: zweites Polsterelement
- 32: drittes Polsterelement
- 33: viertes Polsterelement
- 34: Sitztiefe
- 35: erstes Seitenteil
- 36: zweites Seitenteil
- 37: erstes Schalterelement
- 38: zweites Schalterelement
- 40: Verkabelung
- 41: Eingang
- 42: Ausgang
- G: Grundstellung
- V: verlagerte Stellung
- K: Kabine
- L: Längsrichtung
- H: Höhenrichtung
- B: Breitenrichtung
- VR: Verlagerungsrichtung

## Patentansprüche

1. Sitzgruppe umfassend einen ersten Sitz und einen zweiten Sitz, welche nebeneinander angeordnet sind und jeweils in Sitztiefe und Lendenstütze einstellbar sind, jeweils umfassend ein Sitzteil und ein Rückenlehnenteil,
**dadurch gekennzeichnet, dass**
der erste Sitz und der zweite Sitz jeweils zur gleichzeitigen Einstellung einer Sitztiefe und einer Lendenstütze ausgebildet und vorgesehen sind, wobei die Sitzgruppe derart ausgebildet ist, dass der erste Sitz und der zweite Sitz unabhängig voneinander in der jeweiligen Sitztiefe und der Lendenstütze einstellbar sind.

2. Sitzgruppe nach Anspruch 1,
**dadurch gekennzeichnet, dass**
der erste Sitz einen ersten Rückenlehnenrahmen, einen ersten Sitzteilrahmen und einen ersten Verbindungsrahmen umfasst, wobei der erste Verbindungsrahmen drehbar um eine erste Drehachse mit dem ersten Rückenlehnenrahmen und drehbar um eine zweite Drehachse mit dem ersten Sitzteilrahmen verbunden ist und den ersten Sitzteilrahmen mit dem ersten Rückenlehnenrahmen verbindet, wobei der erste Sitzteilrahmen und der erste Rückenlehnenrahmen mit einem ersten Tragelement derart verbunden sind, dass der erste Sitzteilrahmen und der erste Rückenlehnenrahmen simultan relativ zu dem ersten Tragelement verlagerbar sind; und
dass der zweite Sitz einen zweiten Rückenlehnenrahmen, einen zweiten Sitzteilrahmen und einen zweiten Verbindungsrahmen umfasst, wobei der zweite Verbindungsrahmen drehbar um eine dritte Drehachse mit dem zweiten Rückenlehnenrahmen und drehbar um eine vierte Drehachse mit dem zweiten Sitzteilrahmen verbunden ist und den zweiten Sitzteilrahmen mit dem zweiten Rückenlehnenrahmen verbindet, wobei der zweite Sitzteilrahmen und der zweite Rückenlehnenrahmen mit einem zweiten Tragelement derart verbunden sind, dass der zweite Sitzteilrahmen und der zweite Rückenlehnenrahmen simultan relativ zu dem zweiten Tragelement verlagerbar sind.

3. Sitzgruppe nach Anspruch 2,
**dadurch gekennzeichnet, dass**
das erste Tragelement und das zweite Tragelement miteinander starr verbunden sind, so dass das erste Tragelement und das zweite Tragelement ein gemeinsames Tragelement ausbilden.

4. Sitzgruppe nach Anspruch 2 oder 3,
**dadurch gekennzeichnet, dass**
der erste Rückenlehnenrahmen und der erste Sitzteilrahmen jeweils ausschließlich translatorisch verlagerbar sind und dass der zweite Rückenlehnenrahmen und der zweite Sitzteilrahmen jeweils ausschließlich translatorisch verlagerbar sind.

5. Sitzgruppe nach einem der Ansprüche 2 bis 4,
**dadurch gekennzeichnet, dass**
ein erstes Verstellelement vorgesehen ist, welches dazu ausgebildet ist, das erste Sitzteil in einer Verlagerungsrichtung zu verlagern, und dass ein zweites Verstellelement vorgesehen ist, welches dazu ausgebildet ist, das zweite Sitzteil in der Verlagerungsrichtung zu verlagern.

6. Sitzgruppe nach Anspruch 5,
**dadurch gekennzeichnet, dass**
das erste Verstellelement mit dem ersten Sitzteilrahmen und dem ersten Tragelement und das zweite Verstellelement mit dem zweiten Sitzteilrahmen und dem zweiten Tragelement verbunden ist.

7. Sitzgruppe nach Anspruch 5 oder 6,
**dadurch gekennzeichnet, dass**
das erste Verstellelement und das zweite Verstellelement mit einer einzigen Steuereinheit verbunden sind, wobei die Steuereinheit dazu vorgesehen und ausgebildet ist, die Verstellelemente unabhängig voneinander anzusteuern.

8. Sitzgruppe nach Anspruch 7,
**dadurch gekennzeichnet, dass**
die Steuereinheit unterhalb des ersten Sitzteilrahmens und unterhalb des zweiten Sitzteilrahmens sowie zwischen dem ersten Verstellelement und dem zweiten Verstellelement angeordnet ist.

9. Fahrzeugsitz nach einem der Ansprüche 1 bis 8,
**dadurch gekennzeichnet, dass**
der Sitzteilrahmen und der Rückenlehnenrahmen einen festen und unveränderbaren Winkel zueinander einschließen.

10. Fahrzeugsitz nach einem der Ansprüche 1 bis 9,
**dadurch gekennzeichnet, dass**
zwischen den Sitzteilrahmen und dem zugehörigen Verbindungsrahmen ein erster veränderlicher Winkel und zwischen dem zugehörigen Rückenlehnenrahmen und dem Verbindungsrahmen ein zweiter veränderlicher Winkel vorgesehen ist, wobei die Größe der veränderlichen Winkel sich bei Verlagerung des Sitzteilrahmens verändern, wodurch die Lendenstütze veränderlich ist.

## Geänderte Patentansprüche

### Geänderte Patentansprüche gemäss Regel 137(2) EPÜ.

1. Sitzgruppe (1) umfassend einen ersten Sitz (2) und einen zweiten Sitz (3), welche nebeneinander angeordnet sind und jeweils in Sitztiefe (34) und Lendenstütze einstellbar sind, jeweils umfassend ein Sitzteil (4) und ein Rückenlehnenteil (5),wobei der erste Sitz (2) und der zweite Sitz (3) jeweils zur gleichzeitigen Einstellung einer Sitztiefe (34) und einer Lendenstütze ausgebildet und vorgesehen sind, wobei die Sitzgruppe (1) derart ausgebildet ist, dass der erste Sitz (2) und der zweite Sitz (3) unabhängig voneinander in der jeweiligen Sitztiefe (34) und der Lendenstütze einstellbar sind, wobei ein erster Sitzteilrahmen (2) und ein erster Rückenlehnenrahmen (6) mit einem ersten Tragelement (9) derart verbunden sind, dass der erste Sitzteilrahmen (7) und der erste Rückenlehnenrahmen (6) simultan relativ zu dem ersten Tragelement (9) verlagerbar sind;
wobei ein zweiter Sitzteilrahmen (11) und der zweite Rückenlehnenrahmen (10) mit einem zweiten Tragelement (13) derart verbunden sind, dass der zweite Sitzteilrahmen (11) und der zweite Rückenlehnenrahmen (10) simultan relativ zu dem zweiten Tragelement (13) verlagerbar sind;
wobei das erste Tragelement (9) und das zweite Tragelement (13) miteinander starr verbunden sind, so dass das erste Tragelement (9) und das zweite Tragelement (13) ein gemeinsames Tragelement ausbilden.

2. Sitzgruppe (1) nach Anspruch 1,
**dadurch gekennzeichnet, dass**
der erste Sitz (2) den ersten Rückenlehnenrahmen (6), den ersten Sitzteilrahmen (7) und einen ersten Verbindungsrahmen (8) umfasst, wobei der erste Verbindungsrahmen (8) drehbar um eine erste Drehachse (14) mit dem ersten Rückenlehnenrahmen (6) und drehbar um eine zweite Drehachse (15) mit dem ersten Sitzteilrahmen (7) verbunden ist und den ersten Sitzteilrahmen (7) mit dem ersten Rückenlehnenrahmen (6) verbindet, und dass der zweite Sitz (3) den zweiten Rückenlehnenrahmen (10), den zweiten Sitzteilrahmen (11) und einen zweiten Verbindungsrahmen (12) umfasst, wobei der zweite Verbindungsrahmen (12) drehbar um eine dritte Drehachse (16) mit dem zweiten Rückenlehnenrahmen (10) und drehbar um eine vierte Drehachse (17) mit dem zweiten Sitzteilrahmen (11) verbunden ist und den zweiten Sitzteilrahmen (11) mit dem zweiten Rückenlehnenrahmen (10) verbindet

3. Sitzgruppe (1) nach Anspruch 1 oder 2,
**dadurch gekennzeichnet, dass**
der erste Rückenlehnenrahmen (6) und der erste Sitzteilrahmen (7)) jeweils ausschließlich translatorisch verlagerbar sind und dass der zweite Rückenlehnenrahmen (10) und der zweite Sitzteilrahmen (11) jeweils ausschließlich translatorisch verlagerbar sind.

4. Sitzgruppe (1) nach einem der Ansprüche 1 bis 3,
**dadurch gekennzeichnet, dass**
ein erstes Verstellelement (19) vorgesehen ist, welches dazu ausgebildet ist, das erste Sitzteil (4) in einer Verlagerungsrichtung (VR) zu verlagern, und dass ein zweites Verstellelement (20) vorgesehen ist, welches dazu ausgebildet ist, das zweite Sitzteil (4) in der Verlagerungsrichtung zu verlagern.

5. Sitzgruppe (1) nach Anspruch 4,
**dadurch gekennzeichnet, dass**
das erste Verstellelement (19) mit dem ersten Sitzteilrahmen (7) und dem ersten Tragelement (9) und das zweite Verstellelement (20) mit dem zweiten Sitzteilrahmen (11) und dem zweiten Tragelement (13) verbunden ist.

6. Sitzgruppe (1) nach Anspruch 4 oder 5,
**dadurch gekennzeichnet, dass**
das erste Verstellelement (19) und das zweite Verstellelement (20) mit einer einzigen Steuereinheit (21) verbunden sind, wobei die Steuereinheit (21) dazu vorgesehen und ausgebildet ist, die Verstellelemente (19,20) unabhängig voneinander anzusteuern.

7. Sitzgruppe (1) nach Anspruch 6,
**dadurch gekennzeichnet, dass**
die Steuereinheit (21) unterhalb des ersten Sitzteilrahmens (7) und unterhalb des zweiten Sitzteilrahmens (11) sowie zwischen dem ersten Verstellelement (19) und dem zweiten Verstellelement (20) angeordnet ist.

8. Sitzgruppe (1) nach einem der Ansprüche 2 bis 7,
**dadurch gekennzeichnet, dass**
der Sitzteilrahmen und der Rückenlehnenrahmen einen festen und unveränderbaren Winkel (22) zueinander einschließen.

9. Sitzgruppe (1) nach einem der Ansprüche 2 bis 8,
**dadurch gekennzeichnet, dass**
zwischen den Sitzteilrahmen und dem zugehörigen Verbindungsrahmen ein erster veränderlicher Winkel (23) und zwischen dem zugehörigen Rückenlehnenrahmen und dem Verbindungsrahmen ein zweiter veränderlicher Winkel (24) vorgesehen ist, wobei die Größe der veränderlichen Winkel sich bei Verlagerung des Sitzteilrahmens verändern, wodurch die Lendenstütze veränderlich ist.
